# EUROPÄISCHE PATENTSCHRIFT

(11) **EP 3 981 575 B1**
(45) Veröffentlichungstag und Bekanntmachung des Hinweises auf die Patenterteilung: **06.05.2026**
(21) Anmeldenummer: 20201139.1
(22) Anmeldetag: 09.10.2020
(51) Int. Cl.: B29C 51/26

(54) **ANORDNUNG ZUM ZUFÜHREN EINES HALBZEUGS ZU EINER THERMOFORMMASCHINE, ANORDNUNG ZUM THERMOFORMEN, SOWIE VERFAHREN**
ASSEMBLY FOR FEEDING A SEMI-FINISHED PRODUCT TO A THERMOFORMING MACHINE, ASSEMBLY FOR THERMOFORMING, AND METHOD
AGENCEMENT D'ALIMENTATION EN UN DEMI-PRODUIT D'UNE MACHINE DE THERMOFORMAGE, AGENCEMENT DE THERMOFORMAGE AINSI QUE PROCÉDÉ

(43) Veröffentlichungstag der Anmeldung: 13.04.2022
(73) Patentinhaber: Geiss AG, 96145 Sesslach (DE)
(72) Erfinder: WIERCINSKI, Miroslaw, 96242 Sonnefeld (DE)
(74) Vertreter: Isarpatent

(56) Entgegenhaltungen:
- EP-A1- 1 182 022
- WO-A2-2004/091881
- GB-A- 2 175 868
- JP-A- S6 115 632

## Beschreibung

### GEBIET DER ERFINDUNG

Die vorliegende Erfindung bezieht sich auf eine Anordnung zum Thermoformen mit einer Anordnung zum Zuführen eines Halbzeugs als ein Ausgangsmaterial für das Thermoformen zu einer Thermoformmaschine, sowie auf ein Verfahren zum Zuführen eines Halbzeugs als Ausgangsmaterial für ein Thermoformen zu einer Thermoformmaschine.

### TECHNISCHER HINTERGRUND

Thermoformmaschinen ermöglichen es, aus einem insbesondere flächigen Ausgangsmaterial, welches zum Beispiel in Gestalt von Kunststofffolien oder Kunststoffplatten bereitgestellt wird, mit Hilfe der Einwirkung von Wärme Formteile herzustellen. Dies kann beispielsweise in der Weise erfolgen, dass das Ausgangsmaterial, zum Beispiel ein thermoplastischer Kunststoff, zunächst mittels einer Heizeinrichtung beheizt und somit erwärmt, und anschließend unter Zuhilfenahme eines Formwerkzeugs in die gewünschte Form gebracht wird. Bei dem Ausgangsmaterial handelt es sich hierbei somit jeweils um ein Halbzeug, welches mittels der Thermoformmaschine weiterverarbeitet wird.

Die Zuführung des Halbzeugs zu der Thermoformmaschine geschieht bei einer vollautomatischen Maschine in herkömmlicher Weise entweder ausgehend von einer Rolle oder ausgehend von Plattenzuschnitten.

Beispielsweise ist bei einer herkömmlichen Anordnung ein Beschickungsautomat vorgesehen, der auf einem in der Höhe verfahrbaren Tisch einen Plattenstapel, also einen Stapel geeigneter plattenförmiger Materialstücke, aufnehmen kann. Dieser Plattenstapel wird in den Beschickungsautomaten eingelegt. Im Betrieb kann der Tisch taktweise nach oben fahren, wobei ein Beschickungswagen an seiner Unterseite die oberste Platte von diesem Stapel entnimmt und in die Thermoformmaschine hineintransportiert. Anschließend fährt der Beschickungswagen wieder aus der Thermoformmaschine heraus, um die darauffolgende Platte vom Stapel zu holen. Beim erneuten Hineinfahren in die Thermoformmaschine kann der Beschickungswagen dann die nächste Platte des Ausgangsmaterials für den folgenden Formvorgang von seiner Unterseite in der Thermoformmaschine ablegen, während zugleich das fertige Formteil aus dem soeben beendeten Formungsschritt auf die Oberseite des Beschickungswagens fällt und beim Herausfahren des Beschickungswagens aus der Maschine heraustransportiert wird. Ausgehend von einem Stapel von Plattenzuschnitten können mit dieser Vorgehensweise Formteile sowohl positiv, d. h. von der Einlegeebene nach oben, als auch negativ, also von der Einlegeebene nach unten, hergestellt werden.

Im Falle der Rollenware ist die Materialdicke zumeist beschränkt, jedoch ist Rollenware im allgemeinen preisgünstiger als Plattenware.

Bei einem typischen so genannten Rollenautomaten wird gemäß einer herkömmlichen Bauweise eine Materialbahn, etwa ein Kunststoffmaterial, von einer Rolle mittels einer Nadelkette in eine Thermoformmaschine gezogen. Nach dem Verformen wird das Rollenmaterial weitertransportiert, wodurch mehrere Formteile nacheinander auf der Rollenware entstehen. Diese Formteile werden erst am Ende des Transportvorgangs vereinzelt. Mit einer derartigen Vorgehensweise kann die preisgünstigere Rollenware verwendet werden.

Es hat sich jedoch herausgestellt, dass mit einer derartigen Vorgehensweise negativ geformte Formteile entweder in automatischer Weise nicht hergestellt werden können, oder dass dies einen erheblichen maschinellen Zusatzaufwand erfordert. Dennoch gelingt es mit der herkömmlichen Vorgehensweise auch im letztgenannten Fall nicht, die mögliche Ziehtiefe der Thermoformmaschine bei der Verwendung von Rollenware auszunutzen.

Zudem sind bereits Maschinen vorgeschlagen worden, bei denen Rollenware während des Transports vor oder in der Nadelkette abgeschnitten und dann in dieser Nadelkette als Einzelplatte gehandhabt wird. Die Einschränkungen des herkömmlichen Rollenprinzips, wie es vorstehend beschrieben wurde, werden auf diese Weise allerdings nicht überwunden.

Darüber hinaus können bei Nutzung einer Nadelkette durch das Einstechen in das transportierte Material Materialpartikel oder -splitter entstehen, die in vielen Fällen störend sein können und die Herstellung von Formteilen hoher Qualität, insbesondere hoher Oberflächenqualität, zumindest erschweren oder aufwendiger machen.

Darüber hinaus können vorab zu einem Stapel aufgestapelte Plattenzuschnitte eines Kunststoffmaterials aufgrund elektrostatischer Aufladung Schmutzpartikel oder Staub anziehen, was wiederum bei der Herstellung besonders hochwertiger Formteile unerwünscht sein kann.

In der WO 2004 / 091 881 A2 werden ein Thermoformverfahren und eine Thermoformvorrichtung beschrieben, wobei ein Vorheizen eines bahnförmigen Ausgangsmaterials sowie ein Lagern und Handhaben vorab zugeschnittener Bahnen nicht notwendig sein sollen. Die WO 2004 / 091 881 A2 beschreibt hierzu eine Anordnung zum Thermoformen, bei der ein Extruder mit einer Thermoformvorrichtung kombiniert ist. Die kontinuierlich extrudierte, heiße Bahn gelangt hierbei zunächst auf einen Rollenförderer und wird in Stücke diskreter Länge geschnitten, wobei die zugeschnittenen Stücke dann abwechselnd auf zwei in seitlicher Richtung verfahrende Förderer und von diesen jeweils auf einen stationären Fördertisch gefördert werden. Die zugeschnittenen Stücke werden sodann an deren Umfangsrand jeweils mit Hilfe von Klemmeinrichtungen eines von einem Transferwagen getragenen Klemmrahmens gegriffen und jeweils von den Fördertischen mittels des Transferwagens zunächst in einen Ofen, danach in eine Formungsstation verbracht, wobei in der Formungsstation als Arbeitsbereich das Thermoformen stattfindet.

### ZUSAMMENFASSUNG DER ERFINDUNG

Vor diesem Hintergrund liegt der Erfindung die Aufgabe zugrunde, das Zuführen eines Halbzeugs als Ausgangsmaterial zu einer Thermoformmaschine weiter zu verbessern und hierbei zumindest einige der genannten Nachteile herkömmlicher Vorgehensweisen zu überwinden.

Erfindungsgemäß wird diese Aufgabe durch eine Anordnung mit den Merkmalen des Anspruchs 1 und/oder durch ein Verfahren mit den Merkmalen des Anspruchs 11 gelöst.

Es wird eine Anordnung zum Zuführen eines Halbzeugs als Ausgangsmaterial für ein Thermoformen zu einer Thermoformmaschine vorgeschlagen, wobei die Anordnung eine Ablageeinrichtung aufweist, auf der nacheinander zu verarbeitende Zuschnitte des Ausgangsmaterials jeweils in zumindest teilweise automatisierter Weise bereitstellbar sind. Ferner weist die Anordnung eine bewegbare Beschickungseinheit auf, welche für ein Aufnehmen mindestens eines der Zuschnitte an der Beschickungseinheit eingerichtet ist. Hierbei ist die Beschickungseinheit zum Aufnehmen des Zuschnitts von der Ablageeinrichtung positionierbar. Ferner ist die Beschickungseinheit danach zum Ablegen des von der Ablageeinrichtung aufgenommenen Zuschnitts in einem Arbeitsbereich der Thermoformmaschine positionierbar.

Vorgeschlagen wird erfindungsgemäß eine Anordnung zum Thermoformen mit einer Thermoformmaschine sowie mit einer derartigen Anordnung zum Zuführen eines Halbzeugs, um der Thermoformmaschine das Halbzeug als Ausgangsmaterial für das Thermoformen zuzuführen.

Weiterhin wird ein Verfahren zum Zuführen eines Halbzeugs als Ausgangsmaterial für ein Thermoformen zu einer Thermoformmaschine vorgeschlagen, wobei das Verfahren umfasst:
- Bereitstellen eines von einer Mehrzahl aufeinanderfolgender Zuschnitte des Ausgangsmaterials auf einer Ablageeinrichtung in zumindest teilweise automatisierter Weise;
- Aufnehmen des auf der Ablageeinrichtung bereitgestellten Zuschnitts von dieser durch eine bewegbare Beschickungseinheit;
- Bewegen der Beschickungseinheit; und
- Ablegen des an der Beschickungseinheit von der Ablageeinrichtung aufgenommenen Zuschnitts in einem Arbeitsbereich der Thermoformmaschine.

Eine der Erfindung zu Grunde liegende Idee besteht darin, die jeweils in zumindest teilweise automatisierter Weise, bevorzugt vollautomatisierter Weise, auf der Ablageeinrichtung bereitgestellten Zuschnitte von der Ablageeinrichtung aufzunehmen, die Beschickungseinheit mit dem daran aufgenommenen Zuschnitt zu bewegen und somit in eine andere Position zu bringen, und dann den Zuschnitt zuverlässig und präzise direkt in dem Arbeitsbereich der Thermoformmaschine ablegen zu können. Es bedarf somit weder der Nutzung von Nadelketten oder anderer Maßnahmen, die das zu verarbeitende Ausgangsmaterial durchstechen und somit eine Partikelbildung nach sich ziehen können, noch bedarf es der Nutzung eines Stapels von fertig gelieferten Zuschnitten. Vielmehr wird es möglich, die Zuschnitte einzeln heranzuführen und die einzelnen Zuschnitte bei Bedarf und innerhalb des Verarbeitungsprozesses unmittelbar vor der Zuführung zur Thermoformmaschine und somit unmittelbar vor dem Umformen, sofern erforderlich oder gewünscht, noch einzeln zu behandeln, beispielsweise zu reinigen. Zudem kann ausgehend von der Einlegeebene gesehen sowohl positiv als auch negativ ohne Einschränkung und unter Ausnutzung der Ziehtiefe der Thermoformmaschine produziert werden. Insbesondere kann ferner durch Bereitstellen der nacheinander verarbeiteten Zuschnitte jeweils auf der Ablageeinrichtung mit einer einheitlichen Verfahrensweise und unter einheitlicher Formteilhandhabung automatisiert produziert werden, unabhängig davon, ob Plattenware oder Rollenware als Ausgangshalbzeug verwendet wird.

Das erfindungsgemäße Verfahren kann insbesondere mittels der Anordnung zum Zuführen, die von der erfindungsgemäßen Anordnung zum Thermoformen umfasst ist, durchgeführt werden.

Vorteilhafte Ausgestaltungen und Weiterbildungen ergeben sich aus den Unteransprüchen sowie aus der Beschreibung unter Bezugnahme auf die Zeichnungen.

Bei einer erfindungsgemäßen Gestaltung weist die Anordnung zum Zuführen des Halbzeugs eine der Ablageeinrichtung vorgelagert angeordnete Abrolleinrichtung zum Abrollen einer Rollenware auf. Somit kann vorteilhaft ausgehend von der Rollenware produziert werden, wodurch Kostenvorteile der Rollenware genutzt werden können. Gleichzeitig können eine einheitliche Verfahrensweise und Handhabung der fertigen Formteile analog einem Thermoformen ausgehend von Plattenware erfolgen. Auch bei der Produktion ausgehend von Rollenware kann die Ziehtiefe der Thermoformmaschine vorteilhaft ausgenutzt werden.

Bei dieser erfindungsgemäßen Gestaltung weist die Anordnung zum Zuführen des Halbzeugs eine Trenneinrichtung, insbesondere eine Schneideinrichtung, auf, die für ein Abtrennen eines Stücks der mittels der Abrolleinrichtung bereichsweise abgerollten und insbesondere zumindest bereichsweise auf der Ablageeinrichtung abgelegten Rollenware zum Bilden der Zuschnitte des Ausgangsmaterials eingerichtet ist. Somit kann das Zuschneiden der Zuschnitte direkt vor deren Verarbeitung durch Thermoformen, beispielsweise in einer entsprechend der Arbeitstaktung der Thermoformmaschine getakteten Weise, erfolgen.

Insbesondere ist die Trenneinrichtung der Abrolleinrichtung nachgelagert angeordnet.

Bei einer erfindungsgemäß alternativen oder zusätzlichen Gestaltung ist die Anordnung zum Zuführen des Halbzeugs für ein Bereitstellen der Zuschnitte des Ausgangsmaterials auf der Ablageeinrichtung jeweils als Zuschnitt einer Plattenware eingerichtet. Unter Plattenware können vorgefertigte, gesammelt zugelieferte Zuschnitte verstanden werden. Dies ermöglicht es, die Fertigung der Formteile ausgehend von Plattenware vorzunehmen, beispielsweise wenn die Materialstärke zu groß ist, um das Ausgangsmaterial als Rollenware zu liefern. Jedoch kann auch Ausgangsmaterial, das von seiner Materialstärke her gesehen durchaus noch aufgerollt werden könnte, ebenfalls als vorgefertigt gelieferter Zuschnitt und damit als Plattenware bereitgestellt werden. Vorteilhaft kann dem automatisierten Bereitstellen des Zuschnitts auf der Ablageeinrichtung eine weitere Arbeitsstation, beispielsweise eine Reinigungsvorrichtung, die von einzelnen Zuschnitten durchlaufen wird, vorgelagert sein. Die Plattenware wird bei dieser erfindungsgemäßen Gestaltung somit "von extern", etwa von einem externen Lager oder einer externen Quelle, herangeführt, und die Zuschnitte werden einzeln jeweils in zumindest teilweise automatisierter Weise, vorzugsweise vollautomatisch, auf der Ablageeinrichtung bereitgestellt.

Insbesondere weist die Beschickungseinheit mindestens einen Abschnitt auf, der für ein Aufnehmen eines der Zuschnitte an dem Abschnitt eingerichtet ist. Insbesondere ist der Abschnitt zum Aufnehmen des Zuschnitts von der Ablageeinrichtung und zum Ablegen des Zuschnitts in dem Arbeitsbereich der Thermoformmaschine mittels Bewegen der Beschickungseinheit positionierbar.

In einer Ausgestaltung ist die Beschickungseinheit als ein bewegbarer Beschickungswagen ausgebildet. Eine Bewegung der Beschickungseinheit kann somit in einfacher und zweckmäßiger Weise erreicht werden.

In einer Ausgestaltung ist die bewegbare Beschickungseinheit oberhalb der Ablageeinrichtung verfahrbar. Vorzugsweise ist die bewegbare Beschickungseinheit entlang einer im Wesentlichen horizontalen Richtung verfahrbar. Auf diese Weise gelingt es vorteilhaft, die Zuschnitte an der Beschickungseinheit jeweils von unten her an dieser, insbesondere an dem hierfür vorgesehenen Abschnitt der Beschickungseinheit, aufzunehmen, wobei die Zuschnitte auf der Ablageeinrichtung jeweils insbesondere im Wesentlichen horizontal, etwa auf einer im Wesentlichen horizontalen Fläche, bereitstellbar sind.

Erfindungsgemäß sind die Zuschnitte jeweils an einer Unterseite der Beschickungseinheit aufnehmbar, insbesondere an dem hierfür vorgesehenen Abschnitt der Beschickungseinheit, wobei die Beschickungseinheit hierfür im Bereich der Unterseite derselben mit Aufnahmemitteln ausgestattet ist.

Die Aufnahmemittel können in einer Ausgestaltung beispielsweise als Saugeinrichtungen ausgebildet sein.

In einer Ausgestaltung ist die bewegbare Beschickungseinheit mindestens abschnittsweise in den Arbeitsbereich der Thermoformmaschine hinein verlagerbar. Dies kann zu einem zuverlässigen Ablegen des Zuschnitts in dem Arbeitsbereich in korrekter Position beitragen. Ferner trägt dies zu einem effizienten Heraustransport eines fertiggestellten Formteils bei.

In einer Ausgestaltung ist die Beschickungseinheit derart bewegbar angeordnet, dass auf einer Oberseite der Beschickungseinheit ein aus einem zuvor in dem Arbeitsbereich der Thermoformmaschine abgelegten Zuschnitt mittels Thermoformen hergestelltes und danach entformtes Formteil ablegbar ist, insbesondere in jener Position der Beschickungseinheit, in der die Beschickungseinheit für das Ablegen des Zuschnitts in dem Arbeitsbereich der Thermoformmaschine positioniert ist. Die entformten Formteile können somit einzeln nacheinander aus dem Arbeitsbereich heraustransportiert werden, ohne dass der Transport und das Ablegen des nachfolgenden Zuschnitts hierdurch erschwert würde. Beispielsweise kann das Formteil von einem Spannrahmen der Thermoformmaschine angehoben werden, so dass die Beschickungseinheit zwischen das entformte Formteil und eine Einlege- oder Einspannebene für den nächsten Zuschnitt hinein bewegt werden kann. Es wird somit möglich, Formteile bezüglich dieser Ebene sowohl positiv als auch negativ zu formen, ohne dass die erreichbare Ziehtiefe durch den Handhabungsvorgang eingeschränkt wird.

In einer möglichen Ausgestaltung kann die Ablageeinrichtung als ein Tisch ausgebildet sein.

In einer bevorzugten Ausgestaltung ist die Ablageeinrichtung mit einer Transporteinrichtung ausgebildet, beispielsweise mit einer bandartigen Transporteinrichtung. Dies kann die Handhabung des Halbzeugs, für die zumindest teilweise und bevorzugt vollständig automatisierte Bereitstellung der Zuschnitte, die nacheinander zu verarbeiten sind, verbessern, insbesondere bei der Bereitstellung des Halbzeugs als Rollenware. Dies trägt auch zu einer korrekten Positionierung des einzelnen Zuschnitts bei der Bereitstellung bei.

Insbesondere stellt die Transporteinrichtung der Ablageeinrichtung eine bewegbare, vorzugsweise im Wesentlichen in horizontaler Richtung bewegbare, Ablageoberfläche bereit, die sich bevorzugt im Wesentlichen horizontal erstreckt.

In einer Ausgestaltung weist die Beschickungseinheit einen ersten Abschnitt und einen zweiten Abschnitt auf, wobei der erste und der zweite Abschnitt jeweils für ein Aufnehmen eines Zuschnitts des Ausgangsmaterials an dem Abschnitt eingerichtet sind, und wobei der erste Abschnitt zum Aufnehmen des Zuschnitts von der Ablageeinrichtung positionierbar ist. Dies erhöht die Flexibilität beim Einsatz der Anordnung zum Zuführen des Halbzeugs, zumal einer der ersten und zweiten Abschnitte der Beschickungseinheit für einen weiteren Zuschnitt verfügbar bleibt, während der andere der ersten und zweiten Abschnitte, insbesondere der erste über der Ablageeinrichtung positionierbare Abschnitt, dem Aufnehmen des Zuschnitts von der Ablageeinrichtung und insbesondere dem direkten Ablegen desselben in dem Arbeitsbereich dienen kann. Beispielsweise kann mittels des zweiten Abschnitts ein Aufnehmen eines anderen Zuschnitts von einer anderen Stelle der Anordnung ermöglicht werden. In einer alternativen Ausgestaltung könnte jedoch der zweite Abschnitt zur Aufnahme eines Zuschnitts von der Ablageeinrichtung vorgesehen sein, während der erste Abschnitt für einen weiteren Zuschnitt verfügbar bleibt.

In einer weiteren Ausgestaltung sind der erste Abschnitt und der zweite Abschnitt der Beschickungseinheit entlang einer Bewegungsrichtung der Beschickungseinheit hintereinander angeordnet. Dies erleichtert das Positionieren der Abschnitte mittels eines Bewegens der Beschickungseinheit.

Ferner kann in einer Ausgestaltung die Anordnung zum Zuführen des Halbzeugs eine Beschickungsvorrichtung aufweisen, welche die Beschickungseinheit sowie eine Tischeinrichtung umfasst. Der zweite Abschnitt der Beschickungseinheit kann insbesondere zum Aufnehmen eines anderen Zuschnitts von der Tischeinrichtung und zum Ablegen dieses anderen, von der Tischeinrichtung aufgenommenen Zuschnitts in dem Arbeitsbereich der Thermoformmaschine positionierbar sein, wobei der erste Abschnitt der Beschickungseinheit zum Aufnehmen eines Zuschnitts von der Ablageeinrichtung positionierbar ist. In einer weiteren denkbaren Ausgestaltung sind der erste und der zweite Abschnitt der Beschickungseinheit jeweils über der Ablageeinrichtung, über der Tischeinrichtung, und in dem Arbeitsbereich der Thermoformmaschine positionierbar.

Die Beschickungseinheit kann insbesondere oberhalb der Ablageeinrichtung und oberhalb der Tischeinrichtung verfahrbar sein. An dem zweiten Abschnitt der Beschickungseinheit kann ebenfalls ein Zuschnitt an der Unterseite der Beschickungseinheit aufnehmbar sein, wobei die Beschickungseinheit, insbesondere im Bereich der Unterseite derselben, im Bereich des zweiten Abschnitts vorzugsweise ebenfalls mit Aufnahmemitteln ausgestattet ist.

In Ausgestaltungen, in denen die Beschickungseinheit mit dem ersten und dem zweiten Abschnitt ausgestattet ist, können der erste und/oder zweite Abschnitt in den Arbeitsbereich der Thermoformmaschine hinein verlagerbar sein.

In einer Ausgestaltung ist die Tischeinrichtung der Beschickungsvorrichtung mit einem bewegbaren Tisch ausgebildet, welcher quer zu einer Bewegungsrichtung der Beschickungseinheit bewegbar, vorzugsweise im Wesentlichen entlang einer vertikalen Richtung verfahrbar sein kann. Mit dieser Ausgestaltung kann die Anordnung gemäß einer weiteren Betriebsart betrieben werden, bei der auf dem Tisch ein Stapel bereits vorbereiteter, gestapelter Zuschnitte eines Ausgangsmaterials für das Thermoformen angeordnet wird. Diese Zuschnitte können mittels der Beschickungseinheit nacheinander einzeln vom Stapel abgenommen und in den Arbeitsbereich der Thermoformmaschine hineintransportiert werden. Bei dieser Betriebsart der Anordnung kann insbesondere die zumindest teilweise automatisierte Bereitstellung der Zuschnitte auf der Ablageeinrichtung unterbrochen oder ausgesetzt sein. Der Stapel kann entweder direkt auf dem Tisch abgelegt sein, oder auf einer Palette, die wiederum auf dem Tisch angeordnet ist. Somit kann die Anordnung in mindestens zwei unterschiedlichen Betriebsarten betrieben werden, zum einen unter externer Bereitstellung eines Zuschnitts auf der Ablageeinrichtung, in zumindest teilweise automatisierter Weise, ausgehend von einer Rollenware direkt während des Produktionsvorgangs oder stattdessen einzeln als Plattenware, oder in einer alternativen Betriebsart unter Bereitstellung eines Stapels bereits fertiger Zuschnitte, etwa von Plattenware, auf dem Tisch. Die Anordnung kann somit in sehr flexibler Weise betrieben werden.

Der Tisch kann beispielsweise in einigen Ausgestaltungen taktweise verfahrbar sein. Für eine Betriebsart, in der das Thermoformen ausgehend von einem Zuschnittstapel erfolgt, kann dies nützlich sein.

Insbesondere ist die Ablageeinrichtung einer Beschickungsvorrichtung, umfassend die Beschickungseinheit, vorgelagert angeordnet. Hierbei kann die Ablageeinrichtung beispielsweise außerhalb der Beschickungsvorrichtung angeordnet sein.

In einer anderen Ausgestaltung kann eine Beschickungsvorrichtung vorgesehen sein, die die Beschickungseinheit sowie die Ablageeinrichtung umfasst, wobei die Ablageeinrichtung insbesondere innerhalb der Beschickungsvorrichtung angeordnet ist.

Weiterhin ist in einer bevorzugten Ausgestaltung die Beschickungsvorrichtung der Thermoformmaschine vorgelagert und/oder räumlich neben der Thermoformmaschine angeordnet.

Mittels der Thermoformmaschine kann das Ausgangsmaterial in dem Arbeitsbereich einem Thermoformen unterzogen werden, um Formteile herzustellen. Als Ausgangsmaterial wird der Thermoformmaschine als das Halbzeug beispielsweise ein Folien- oder Plattenmaterial, insbesondere ein Kunststoff-Folienmaterial oder ein Kunststoff-Plattenmaterial, zugeführt.

Die Thermoformmaschine ist bei der Erfindung als eine Closed-Chamber-Thermoformmaschine ausgebildet, welche ein im Betrieb geschlossenes und abgedichtetes Maschinengehäuse aufweist.

In einer Ausgestaltung der Anordnung zum Thermoformen ist die Beschickungsvorrichtung zwischen der Thermoformmaschine und der Ablageeinrichtung angeordnet.

In einer erfindungsgemäßen Ausführung des Verfahrens wird zum Bereitstellen des Zuschnitts des Ausgangsmaterials auf der Ablageeinrichtung ein Stück eines als Rollenware bereitgestellten Ausgangsmaterials abgerollt, insbesondere auf der Ablageeinrichtung zumindest abschnittsweise abgelegt, und zum Bilden des Zuschnitts von der verbleibenden Rollenware abgetrennt.

In einer alternativen erfindungsgemäßen Ausführung des Verfahrens wird der Zuschnitt des Ausgangsmaterials auf der Ablageeinrichtung als Zuschnitt einer Plattenware bereitgestellt.

Die Vorteile der Bereitstellung des Ausgangsmaterials als Rollen- oder als Plattenware wurden weiter oben bereits jeweils erläutert.

Die obigen Ausgestaltungen und Weiterbildungen lassen sich, sofern sinnvoll, beliebig miteinander kombinieren.

Die vorstehend beschriebenen Ausgestaltungen und Weiterbildungen können in analoger Weise jeweils auf die Anordnung zum Zuführen des Halbzeugs zu einer Thermoformmaschine und somit auf die Anordnung zum Thermoformen, und auf das Verfahren zum Zuführen des Halbzeugs Anwendung finden.

### INHALTSANGABE DER ZEICHNUNG

Die Erfindung wird nachfolgend anhand der in den schematischen Figuren angegebenen Ausführungsbeispiele näher erläutert. Es zeigen hierbei:
- Fig. 1: eine Anordnung gemäß einem ersten Ausführungsbeispiel, in einer schematischen Seitenansicht, in einem ersten Arbeitstakt zur Produktion von Formteilen;
- Fig. 2: die Anordnung der Fig. 1 in einem auf den ersten Takt folgenden zweiten Takt;
- Fig. 3: die Anordnung der Fig. 1, in einem Betrieb gemäß einer alternativen Betriebsart;
- Fig. 4: eine Anordnung gemäß einem zweiten Ausführungsbeispiel, in einer schematischen Seitenansicht, in einem ersten Arbeitstakt zur Produktion von Formteilen;
- Fig. 5: die Anordnung der Fig. 4 in einem auf den ersten Takt folgenden zweiten Takt;
- Fig. 6: eine Anordnung gemäß einem dritten Ausführungsbeispiel, in einer schematischen Seitenansicht; und
- Fig. 7: eine Anordnung gemäß einem vierten Ausführungsbeispiel in einer schematischen Seitenansicht.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

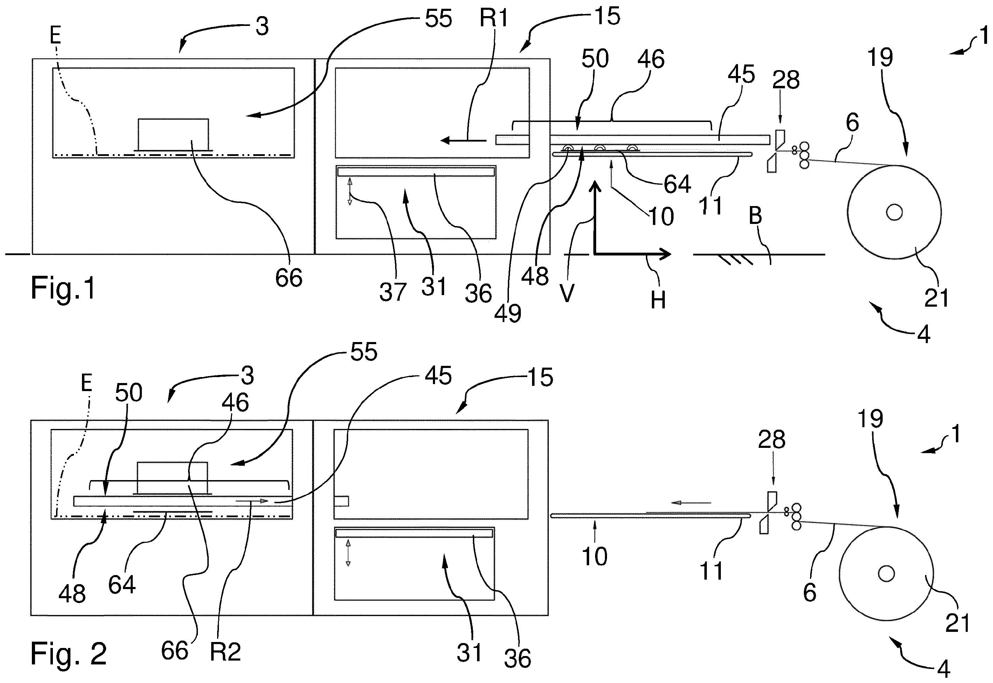

Fig. 1 zeigt eine Anordnung 1 zum Thermoformen, mit einer Thermoformmaschine 3 sowie einer der Thermoformmaschine 3 zugeordneten Anordnung 4 zum Zuführen eines Halbzeugs als Ausgangsmaterial 6 für das Thermoformen zu der Thermoformmaschine 3. In Fig. 1 kommt als Halbzeug, welches als Ausgangsmaterial 6 zugeführt wird, eine Rollenware zum Einsatz.

Die Anordnung 4 umfasst eine Ablageeinrichtung 10 sowie eine Beschickungsvorrichtung 15. Ferner umfasst die Anordnung 4 in Fig. 1 eine Abrolleinrichtung 19 zum Abrollen der Rollenware von einer Rolle 21, und eine Trenneinrichtung 28 zum Abtrennen von Stücken der Rollenware. Die Thermoformmaschine 3, die Beschickungsvorrichtung 15, und die Ablageeinrichtung 10 sind in Fig. 1 in dieser Reihenfolge entlang einer horizontalen Richtung H nebeneinander angeordnet und auf einem im Wesentlichen horizontalen Boden B aufgestellt, wobei ein Traggestell o. ä. für die Ablageeinrichtung 10 der besseren Übersicht halber nicht dargestellt ist. Die Beschickungsvorrichtung 15 ist somit in Fig. 1 neben der Thermoformmaschine 3 an diese angrenzend angeordnet, wobei die Ablageeinrichtung 10 außerhalb der Beschickungsvorrichtung 15 und dieser vorgelagert und benachbart neben dieser vorgesehen ist. Der Ablageeinrichtung 10 in der horizontalen Richtung H vorgelagert sind die Trenneinrichtung 28 und die Abrolleinrichtung 19 vorgesehen. Die Trenneinrichtung 28 ist somit der Abrolleinrichtung 19 entlang des Förderpfades des Ausgangsmaterials 6 nachgelagert zwischen der Abrolleinrichtung 19 und der Ablageeinrichtung 10 angeordnet. Für die Trenneinrichtung 28 und die Abrolleinrichtung 19 sind der besseren Übersicht halber Gehäuse oder Traggestelle ebenfalls jeweils in den Figuren nicht dargestellt.

Auf der Rolle 21 ist das Halbzeug als Rollenware und Ausgangsmaterial 6 für das Thermoformen in der Thermoformmaschine 3 bereitgestellt. Bei dem Ausgangsmaterial 6 handelt es sich insbesondere um eine Kunststofffolie, beispielsweise gebildet mit einem thermoplastischen Kunststoff. Gegenüber Plattenware ist Rollenware oftmals günstiger im Preis.

Die Beschickungsvorrichtung 15 weist eine Tischeinrichtung 31 auf, welche mit einem bewegbaren, im Wesentlichen entlang einer vertikalen Richtung V verfahrbaren Tisch 36 ausgebildet ist. Die Verfahrbarkeit des Tisches 36 ist in Fig. 1 schematisch mittels eines Pfeils 37 angedeutet.

Ferner weist die Beschickungsvorrichtung 15 eine bewegbare Beschickungseinheit 45 auf, die als ein bewegbarer Beschickungswagen ausgebildet und oberhalb der Tischeinrichtung 36 und der Ablageeinrichtung 10 im Wesentlichen entlang der horizontalen Richtung H verfahrbar ist. Die Beschickungseinheit 45 weist einen Abschnitt 46 auf, wobei die Beschickungseinheit 45 an der Unterseite 48 derselben im Bereich des Abschnitts 46 mit Aufnahmemitteln 49 ausgestattet ist, die für ein Aufnehmen von Zuschnitten des Ausgangsmaterials 6 am Abschnitt 46 eingerichtet sind. Beispielsweise können die Aufnahmemittel 49 jeweils als Saugeinrichtung ausgebildet sein. Nur einige wenige der Aufnahmemittel 49 sind für den Abschnitt 46 in Fig. 1 schematisch angedeutet.

Bei der Thermoformmaschine 3 der Fig. 1 handelt es sich um eine Closed-Chamber-Thermoformmaschine. Fig. 1 zeigt einen Arbeitsbereich 55 der Thermoformmaschine 3, sowie eine Einlege- oder Einspannebene E für das Ausgangsmaterial 6, welches thermogeformt werden soll. Die Einlegeebene E ist in Fig. 1 schematisch doppelt-strichpunktiert eingezeichnet. Unterhalb der Einlegeebene E befindet sich bei der Thermoformmaschine 3 ein im Betrieb der Thermoformmaschine 3 geschlossenes und abgedichtetes Maschinengehäuse. Ein Formwerkzeug und ein insbesondere oberhalb der Einlegeebene E bewegbarer Spannrahmen, der insbesondere auch zum Festspannen des Ausgangsmaterials 6 etwa in der Ebene E dient, sind in Fig. 1 der besseren Übersicht halber ebenfalls nicht näher dargestellt. Ebenso ist eine Heizung zum Erwärmen des zu verarbeitenden Materials nicht gezeigt.

Die Funktionsweise der Anordnungen 1, 4 der Fig. 1 wird im Folgenden erläutert.

Um der Thermoformmaschine 3 das Halbzeug als Ausgangsmaterial 6 für das Thermoformen zuzuführen, wird von der Rollenware auf der Rolle 21 zunächst ein Stück mittels der Abrolleinrichtung 19 abgerollt. Während des Abrollens wird das Ausgangsmaterial 6, mithin zumindest ein Teil des abgerollten Stücks desselben, abschnittsweise auf der Ablageeinrichtung 10 abgelegt. Der Vorgang ist in Fig. 2 für einen späteren Arbeitstakt zeichnerisch illustriert.

Die Ablageeinrichtung 10 weist eine bandartige Transporteinrichtung 11 auf, die beispielhaft als ein antreibbares Endlosband ausgebildet ist, und die im Bereich einer Oberseite der Transporteinrichtung 10 eine in der horizontalen Richtung H bewegbare, horizontale Ablageoberfläche bereitstellt. Das abgerollte Stück des Ausgangsmaterials 6 kann hierbei flach und horizontal in zuverlässiger Weise abgelegt werden.

Ist die gewünschte Menge des Ausgangsmaterials 6 abgerollt und auf der Ablageeinrichtung 10 abgelegt, wird das abgelegte Stück mittels der Trenneinrichtung 28, die in Fig. 1 als Schneideinrichtung ausgebildet ist, vom Rest der Rollenware abgeschnitten, wodurch auf der Ablageeinrichtung 10 ein Zuschnitt 64 bereitgestellt ist, der nachfolgend in der Thermoformmaschine 3 einem Thermoformen unterzogen werden wird, um ein Formteil 66 herzustellen. Ein in einem vorangehenden Arbeitszyklus bereits erzeugtes Formteil 66 ist in Fig. 1 im Arbeitsbereich 55 der Thermoformmaschine 3 schematisch skizziert.

Die vorstehend beschriebene Bereitstellung des Zuschnitts 64 auf der Ablageeinrichtung 10 erfolgt in zumindest teilweise automatisierter, vorzugsweise vollautomatischer Weise. Hierfür ist Anordnung 4 bevorzugt mit geeigneten Steuerungseinrichtungen, Sensoreinrichtungen sowie Antrieben und/oder Aktuatoren ausgestattet, die einen entsprechend automatisierten Betrieb ermöglichen, jedoch der besseren Übersicht halber in den Figuren nicht näher dargestellt sind.

In dem Takt der Fig. 1 wird der Zuschnitt 64 mittels der Aufnahmemittel 49 an dem Abschnitt 46 der Beschickungseinheit 45 aufgenommen. In der in Fig. 1 gezeigten Stellung oder ersten Position der Beschickungseinheit 45 ragt der Abschnitt 46 sowie der größte Teil der Beschickungseinheit 45 auf der von der Thermoformmaschine 3 abgewandten Seite der Beschickungsvorrichtung 15 aus der Beschickungvorrichtung 15 hervor und erstreckt sich horizontal über die Ablageeinrichtung 10 hinweg. Fig. 1 zeigt, dass in diesem Schritt der abgeschnittene Folienzuschnitt 64 der Rollenware an die Unterseite 48 im Bereich des Abschnitts 46 übergeben wird. In Fig. 1 ist somit die Beschickungseinheit 45 zum Aufnehmen des Zuschnitts 64 von der Ablageeinrichtung 10 positioniert. Nachdem der Zuschnitt 64 an dem über der Ablageeinrichtung 10 positionierten Abschnitt 46 aufgenommen ist, wird die Beschickungseinheit 45 in einer Richtung R1 parallel zur horizontalen Richtung H verfahren, derart, dass die Beschickungseinheit 45 aus der ersten Position, in der der Abschnitt 46 zum Aufnehmen des Zuschnitts 64 von der Ablageeinrichtung 10 positioniert ist, in eine zweite Position bewegt wird, in der der Abschnitt 46 in den Arbeitsbereich 55 der Thermoformmaschine 3 hinein verlagert ist, siehe Fig. 2. In Fig. 2 ist die Beschickungseinheit 45 mit dem Abschnitt 46 zum Ablegen des zuvor von der Ablageeinrichtung 10 aufgenommenen Zuschnitts 64 in dem Arbeitsbereich 55 positioniert und der Zuschnitt 64 wird direkt dort abgelegt. Bei der Bewegung der Beschickungseinheit 45 zwischen der Position der Fig. 1 und jener der Fig. 2 verfährt die Beschickungseinheit 45 über die bei diesem Vorgang nicht weiter benutzte Tischeinrichtung 31 hinweg.

Die Beschickungsvorrichtung 15 ist derart ausgebildet, dass auf einer Oberseite 50 der Beschickungseinheit 45 das im vorangehenden Arbeitszyklus durch Thermoformen hergestellte Formteil 66 abgelegt werden kann. Dies zeigt Figur 2. Das entformte Formteil 66 wird durch den in den Figuren nicht näher dargestellten Spannrahmen gegriffen und in der vertikalen Richtung V angehoben, bevor die Beschickungseinheit 45 wie in Fig. 2 gezeigt in Richtung R1 horizontal in den Arbeitsbereich 55 einfährt. Wie beschrieben trägt hierbei die Beschickungseinheit 45 an ihrer Unterseite 48 im Abschnitt 46 den Zuschnitt 64. Im Zustand der Fig. 2 hat der Spannrahmen das Formteil 66 auf die Oberseite 50 der Beschickungseinheit 45 fallengelassen oder darauf abgelegt, während im Wesentlichen gleichzeitig der an dem Abschnitt 46 aufgenommene Zuschnitt 64 für den nächsten Formvorgang in dem Arbeitsbereich 55 abgelegt wird.

Während der fortgesetzten Produktion aufeinanderfolgender Formteile 66 werden die in Fig. 1 und 2 dargestellten Takte oder Verfahrensschritte abwechselnd wiederholt, wodurch mittels der Beschickungseinheit 45 sukzessive Zuschnitte 64 des Ausgangsmaterials 6 in den Arbeitsbereich 55 hineintransportiert und fertige Formteile 66 aus diesem heraustransportiert werden. Eine Vielzahl von Formteilen 66 wird auf diese Weise gefertigt.

Während des in Fig. 2 dargestellten, vorstehend beschriebenen Vorgangs wird durch Abrollen und Zuschneiden mittels der Abrolleinrichtung 19 und der Trenneinrichtung 28 ein weiterer Zuschnitt 64 auf der Ablageeinrichtung 10 zumindest teilweise automatisiert bereitgestellt. Nach Beendigung des zweiten Takts der Fig. 2 verfährt die Beschickungseinheit 45 in einer zweiten Richtung R2 entgegengesetzt der ersten Richtung R1 und im Wesentlichen parallel zur horizontalen Richtung H mit dem Abschnitt 46 wieder über die Ablageeinrichtung 10.

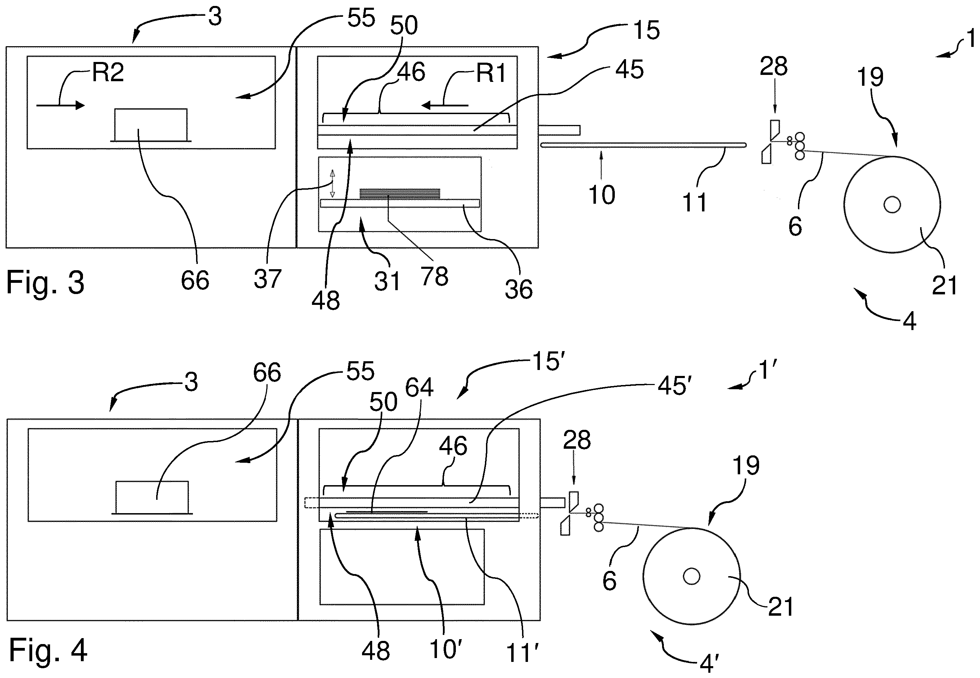

Der Tisch 36 kann dafür eingerichtet sein, in einer anderen Betriebsart, die nun bezugnehmend auf Fig. 3 erläutert werden soll, einen Stapel 78 von Zuschnitten, insbesondere von Zuschnitten einer Plattenware, aufzunehmen, wobei dieser Stapel 78 direkt oder mittels einer hierfür vorgesehenen Palette (in den Figuren nicht gezeigt) auf dem Tisch 36 angeordnet werden kann. In der Betriebsart der Fig. 1 und 2 fehlt ein derartiger Stapel 78, stattdessen werden in Fig. 1 und 2 einzeln nacheinander und automatisiert bereitgestellte Zuschnitte 64 von der Ablageeinrichtung 10 aufgenommen, direkt in den Arbeitsbereich 55 hinein transportiert und dort abgelegt, und somit nacheinander in der Thermoformmaschine 3 verarbeitet.

Vorstehend wurde bereits beschrieben, dass der Tisch 36 in Verfahrrichtung 37 im Wesentlichen parallel zur vertikalen Richtung V und somit quer zu den horizontalen Bewegungsrichtungen R1, R2 der Beschickungseinheit 45 verfahrbar ist. Der Tisch 36 kann insbesondere getaktet verfahrbar sein.

Fig. 3 illustriert, wie in der anderen, gegenüber jener der Fig. 1, 2 modifizierten Betriebsart der Anordnungen 1, 4 der Stapel 78 einer Vielzahl von Materialzuschnitten eines Ausgangsmaterials 6, etwa ein Platten- oder Folienstapel, auf dem Tisch 36 angeordnet ist. In dieser Betriebsart werden die als Plattenstapel 78 bereitgestellten Zuschnitte durch Thermoformen dieser zu Formteilen 66 verarbeitet.

Die Abrolleinrichtung 19 wird in der Betriebsart der Fig. 3 nicht benutzt, auch die Trenneinrichtung 28 wird in dieser Betriebsart nicht betätigt. An dem Abschnitt 46 werden in der Betriebsart der Fig. 3 keine Zuschnitte von der Ablageeinrichtung 10 aufgenommen. Stattdessen werden sukzessive einzelne Zuschnitte jeweils vom oberen Ende des Stapels 78 an dem Abschnitt 46 aufgenommen, danach der Abschnitt 46 durch Bewegen der Beschickungseinheit 45 in Richtung R1 in den Arbeitsbereich 55 hinein verlagert, um den Zuschnitt, der zuvor vom Stapel 78 aufgenommen wurde, in dem Arbeitsbereich 55 abzulegen und zugleich auf der Oberseite 50 der Beschickungseinheit 45 das fertige Formteil 66 des vorangehenden Arbeitszyklus entgegenzunehmen. Anschließend verfährt die Beschickungseinheit 45 in Richtung R2 zurück in die Position der Fig. 3, in der sie über dem Tisch 36 der Tischeinrichtung 31 positioniert ist.

Der Tisch 36 kann bei der Betriebsart der Fig. 3 taktweise nach oben verfahren werden. Wenngleich der Stapel 78 in Fig. 3 als direkt auf dem Tisch 36 aufgelegt gezeigt ist, ist es denkbar, den Stapel 78 auf einer geeigneten Palette (in den Figuren nicht gezeigt) anzuordnen und die Palette dann auf dem Tisch 36 zu platzieren, bevor der Betrieb der Anordnung 1, 4 gestartet wird. Die zusätzliche Höhe der Palette wird beim Verfahren des Tisches 36 berücksichtigt.

Die Anordnung 4 mit dem vertikal verfahrbaren Tisch 36 und der außerhalb der Beschickungsvorrichtung 15 angeordneten Ablageeinrichtung 10 ermöglicht vorteilhaft einen Betrieb in mehreren Betriebsarten - unter Zuführen des Ausgangsmaterials 6 als Halbzeug von der Rolle 21 und sukzessivem Zuschneiden der Zuschnitte 64 und deren Bereitstellung auf der Ablageeinrichtung 10 in automatisierter Weise, oder alternativ unter Zuführen von Zuschnitten durch Aufnehmen dieser von einem zuvor bereitgestellten Stapel 78 aus Platten- oder Folienzuschnitten. Die Anordnung 1 umfassend die Anordnung 4 ist also sehr flexibel einsetzbar.

Bei der Anordnung 1 können also in den verschiedenen Betriebsarten die Zuschnitte 64, und das Formteil 66, beim Zuführen bzw. beim Herausnehmen aus der Thermoformmaschine 3 in analoger und somit einheitlicher Weise behandelt werden, unabhängig davon, ob Plattenware oder Rollenware als Ausgangsmaterial benutzt wird. Zudem kann eine Beeinträchtigung der realisierbaren Ziehtiefe, sowohl in positiver als auch in negativer Richtung, gerechnet von der Ebene E aus, durch die Transportvorgänge mit der Anordnung 4, wie vorstehend beschrieben, vermieden werden.

Vorteilhaft kann bei der Anordnung 1 der Fig. 1 bis 3 Rollenware verwendet werden, falls das gewünschte Ausgangsmaterial 6 als Rollenware verfügbar ist. Falls das Ausgangsmaterial 6 zum Beispiel zu stark ist, um auf einer Rolle bereitgestellt zu werden, kann alternativ vom Plattenstapel 78 gearbeitet werden. Somit ermöglicht die Anordnung 1 die Nutzung des Preisvorteils der Rollenware bei gleichzeitiger Flexibilität.

Zudem entstehen bei der unter Bezugnahme auf Fig. 1 bis 3 beschriebenen Art und Weise, die Zuschnitt 64 zuzuführen und das Formteil 66 zu transportieren, keine durch den Transportmechanismus bedingten Materialpartikel oder -splitter. Dies trägt dazu bei, hochwertige Formteile 66 mit nur geringem Ausschuss produzieren zu können.

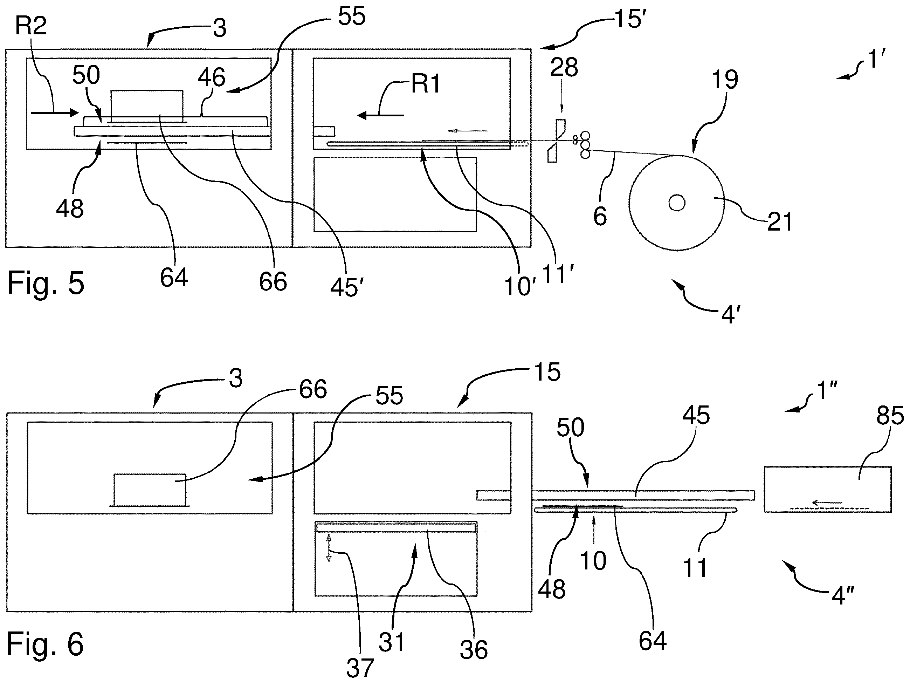

Eine Anordnung 1' zum Thermoformen gemäß einem weiteren Ausführungsbeispiel zeigen Fig. 4 und 5. Die Anordnung 1' unterscheidet sich von der Anordnung 1 darin, dass statt der Beschickungsvorrichtung 15 eine Beschickungsvorrichtung 15' mit einer analog der Beschickungseinheit 45 der Fig. 1 bis 3 ausgebildeten Beschickungseinheit 45', jedoch ohne die Tischvorrichtung 31 mit dem verfahrbaren Tisch 36, vorgesehen ist. Hierbei ist die Ablageeinrichtung 10', für nacheinander zu verarbeitende und jeweils in zumindest teilweise automatisierter Weise bereitgestellte Zuschnitte 64 des Ausgangsmaterials 6, innerhalb der Beschickungsvorrichtung 15' angeordnet. Darüber hinausgehend unterscheidet sich die Ablageeinrichtung 10', die ebenso wie die Ablageeinrichtung 10 des ersten Ausführungsbeispiels eine bandartige Transporteinrichtung 11' aufweist, nicht von der Ablageeinrichtung 10 der Fig. 1 bis 3.

Die mit der Ablageeinrichtung 10' und der Beschickungsvorrichtung 15' sowie der Abrolleinrichtung 19 und der Trenneinrichtung 28 gebildete Anordnung 4' der Fig. 4, 5 zum Zuführen des Halbzeugs kann in horizontaler Richtung H kompakter gebaut werden, bietet jedoch anders als die Anordnung 4 in Fig. 1-3 nicht die Möglichkeit, einen Plattenstapel 78 zu laden.

Beim Betrieb der Anordnung 1' der Fig. 4 und 5 wird durch den Abschnitt 46 der Beschickungseinheit 45' in Fig. 4 der Zuschnitt 64 von der Ablageeinrichtung 10' aufgenommen und analog zu dem bezüglich der Fig. 1 bis 3 Beschriebenen in den Arbeitsbereich 55 der Thermoformmaschine 3 verbracht. Beim erneuten Herausfahren aus dem Arbeitsbereich 55 wird, wiederum analog zum ersten Ausführungsbeispiel, ein im vorherigen Arbeitszyklus gebildetes Formteil 66 heraustransportiert.

Eine Anordnung 1" zum Thermoformen mit einer Anordnung 4" zum Zuführen eines Halbzeugs gemäß einem weiteren Ausführungsbeispiel zeigt Fig. 6.

Aufbau und Betrieb der Anordnung 1" sind mit Ausnahme der im Folgenden beschriebenen Unterschiede den zu den Fig. 1 bis 3 gegebenen Erläuterungen analog. In Fig. 6 ist wiederum eine Betriebsart möglich, in der Zuschnitte 64 auf der Ablageeinrichtung 10 automatisiert und sukzessive bereitgestellt werden. Ferner ist auch eine Betriebsart, bei der analog Fig. 3 eine Verarbeitung von Ausgangsmaterial ausgehend von einem Stapel 78 erfolgt, möglich.

Im Unterschied zu Fig. 1 bis 3 jedoch weist die Anordnung 4" der Anordnung 1" weder die Abrolleinrichtung 19 noch die Trenneinrichtung 28 auf. Stattdessen kann gemäß Fig. 6 eine weitere Arbeitsstation 85 der Ablageeinrichtung 10 vorgelagert sein, wobei die Arbeitsstation 85 jedoch nicht zwingend erforderlich ist. Einzelne Zuschnitte 64 werden nacheinander sukzessive aus einer externen Quelle bereitgestellt, durchlaufen bei dem gezeigten Beispiel in Fig. 6 einzeln die Arbeitsstation 85, bei der es sich beispielsweise um eine Reinigungseinrichtung handeln kann, und gelangen dann auf die Ablageeinrichtung 10. Dieser Bereitstellungsvorgang ist vorzugsweise wiederum vollautomatisiert. Auch in Fig. 6 ist die Ablageeinrichtung 10 beispielhaft mit einer bandartigen Transporteinrichtung 11 ausgestattet. Die weitere Verarbeitung der Zuschnitte 64 erfolgt analog dem zu Fig. 1 bis 3 beschriebenen Betrieb. Wird die Anordnung 1" im Betriebsmodus analog Fig. 3 betrieben, kann vorgesehen sein, dass die Arbeitsstation 85, falls vorhanden, abgeschaltet oder in einen Ruhezustand versetzt ist und von der externen Quelle keine Zuschnitte 64 zu der Ablageeinrichtung 10 gefördert werden.

Auch bei dem Ausführungsbeispiel der Fig. 4 und 5 kann ferner die Abrolleinrichtung 19 und die Trenneinrichtung 28 weggelassen und durch eine vorzugsweise vollautomatische Zuführung einzelner sukzessive Zuschnitte 64, beispielsweise analog Fig. 6 und bei Bedarf unter Vorschalten der Arbeitsstation 85, ersetzt werden.

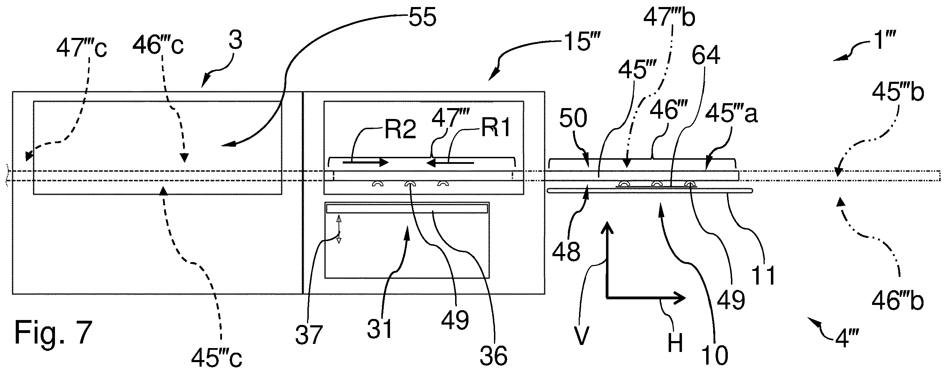

Ein viertes Ausführungsbeispiel ist in Fig. 7 illustriert. Wiederum sollen nachfolgend die Unterschiede gegenüber dem ersten Ausführungsbeispiel erläutert werden.

In Fig. 7 ist eine Anordnung 1‴ zum Thermoformen gezeigt, mit einer Thermoformmaschine 3 und einer dieser vorgeschalteten Anordnung 4‴ zum Zuführen eines Halbzeugs als Ausgangsmaterial 6 für das Thermoformen zu der Thermoformmaschine 3. Die Anordnung 4‴ weist eine Beschickungsvorrichtung 15‴ auf, sowie eine Ablageeinrichtung 10 analog jener des ersten Ausführungsbeispiels. Ferner kann im Falle der Anordnung 4‴ eine Abrolleinrichtung 19 und eine Trenneinrichtung 28, wie vorstehend beschrieben, oder stattdessen eine Zuführung aus externer Quelle und unter eventueller Zwischenschaltung der Arbeitsstation 85, wie zu Fig. 6 erläutert, vorgesehen sein. Dies ist zur Vereinfachung und besseren Übersicht in Fig. 7 nicht dargestellt.

Eine bewegbare Beschickungseinheit 45‴ der Beschickungsvorrichtung 15"', weist einen ersten Abschnitt 46‴ und einen zweiten Abschnitt 47‴ auf, welche entlang einer horizontalen Richtung H und entlang einer Bewegungsrichtung R1, R2 der Beschickungseinheit 45‴ hintereinander an der Beschickungseinheit 45‴ angeordnet sind. Die Beschickungseinheit 45‴ ist somit gegenüber der Beschickungseinheit 45, 45' der vorangehend beschriebenen Ausführungsbeispiel verlängert ausgebildet. Im Bereich ihrer Unterseite 48 ist die Beschickungseinheit 45‴ innerhalb der Abschnitte 46‴ und 47‴ jeweils mit den bereits zuvor beschriebenen Aufnahmemitteln 49 ausgestattet. In dieser Weise sind die ersten und zweiten Abschnitte 46"', 47‴ jeweils für ein Aufnehmen eines Zuschnitts 64 an dem Abschnitt 46"', 47‴ eingerichtet. Die Abschnitte 46‴ und 47‴ sind in fester räumlicher Relation zueinander an der Beschickungseinheit 45‴ vorgesehen.

Auch bei dem Ausführungsbeispiel der Fig. 7 weist die Beschickungsvorrichtung 15‴ eine Tischeinrichtung 31 mit einem Tisch 36, wie vorstehend zum ersten Ausführungsbeispiel beschrieben, auf. Wiederum ist bei der Anordnung 4‴ der Fig. 7 bei Bedarf der Tisch 36 zur Aufnahme eines Plattenstapels 78 nutzbar.

Die Beschickungseinheit 45‴ ist oberhalb der Tischeinrichtung 31 und der Ablageeinrichtung 10 entlang der horizontalen Richtung H in den beiden entgegengesetzten Richtungen R1, R2 bewegbar.

In einer ersten Variante der Anordnung 4‴ des vierten Ausführungsbeispiels kann die Beschickungseinheit 45‴ derart positionierbar sein, dass der zweite Abschnitt 47", der näher an der Thermoformmaschine 3 angeordnet ist als der erste Abschnitt 46‴, zum Aufnehmen eines Zuschnitts 64 von der Ablageeinrichtung 10 positionierbar ist. In Fig. 7 ist eine entsprechende Position der Beschickungseinheit 45‴ in doppeltstrichpunktierter Linie illustriert und mit dem Bezugszeichen 45"'b gekennzeichnet.

Nach Aufnehmen des Zuschnitts 64 von der Ablageeinrichtung 10 ist bei der ersten Variante vorgesehen, dass die Beschickungseinheit 45‴ in Richtung R1 mit dem Abschnitt 47" in den Arbeitsbereich 55 der Thermoformmaschine 3 einfährt, um den Zuschnitt 64 in dem Arbeitsrecht 55 abzulegen und zugleich ein fertiges Formteil 66 auf seiner Oberseite 50 aufzunehmen. In Richtung R2 entgegengesetzt zu R1 fährt die Beschickungseinheit 45‴ dann wieder aus dem Arbeitsbereich 55 heraus.

Dieser Vorgang kann mehrfach wiederholt werden, um eine Reihe von Formteilen 66 herzustellen, wobei hierbei der erste Abschnitt 46‴ nicht verwendet wird.

Bei einer weiteren Variante kann die Aufnahme des auf der Ablageeinrichtung 10 wiederum vorzugsweise automatisiert bereitgestellten Zuschnitts 64 mittels des Abschnitts 46‴ an der Unterseite 48 der Beschickungseinheit 45‴ erfolgen. Bei dieser zweiten Variante wird, wie auch bei der vorstehenden ersten Variante, der Zuschnitt 64 direkt in die Thermoformmaschine 3 hineintransportiert, wofür die Beschickungseinheit 45‴ in Richtung R1 in die Thermoformmaschine 3 eingefahren wird, so dass der erste Abschnitt 46‴ in dem Arbeitsbereich 55 positioniert wird und dort den Zuschnitt 64 ablegen sowie im Bereich der Oberseite 50 der Beschickungseinheit 45‴ ein Formteil 66 entgegennehmen kann, wobei diese Position von Beschickungseinheit 45‴ und erstem Abschnitt 46‴ in Fig. 7 gestrichelt skizziert und mit 45‴c bzw. 46"'c bezeichnet ist.

In einer weiteren Variante der Anordnung 4‴ gemäß dem vierten Ausführungsbeispiel der Fig. 7 kann vorgesehen sein, dass in einer ersten Position, in der Fig. 7 in durchgezogener Linie illustriert und mit 45"'a bezeichnet, der erste Abschnitt 46‴ zum Aufnehmen eines der Zuschnitte 64 von der Ablageeinrichtung 10 und der zweite Abschnitt 47‴ zum vorzugsweise gleichzeitigen Aufnehmen eines anderen Zuschnitts 64 (in Fig. 7 nicht gezeigt) von der Tischeinrichtung 31 positionierbar sind. Danach kann die Beschickungseinheit 45‴ in Richtung R1 verfahren werden, derart, dass der zweite Abschnitt 47‴ in den Arbeitsbereich 55 hinein verlagert wird. In dieser zweiten Position, die in Fig. 7 nicht im Detail illustriert ist, ist somit der erste Abschnitt 46‴ über der Tischeinrichtung 31 angeordnet, während der zweite Abschnitt 47" in den Arbeitsbereich 55 der Thermoformmaschine 3 hinein verlagert ist. In dieser zweiten Position ist somit der erste Abschnitt 46‴ dafür positioniert, den zuvor von der Ablageeinrichtung 10 aufgenommenen Zuschnitt 64 auf der Tischeinrichtung 31 abzulegen, wohingegen der zweite Abschnitt 47‴ zum Ablegen des anderen, zuvor von der Tischeinrichtung 31 aufgenommenen Zuschnitts 64 in dem Arbeitsbereich 55 der Thermoformmaschine 3 positioniert ist. Auch bei dieser Betriebsweise kann nach Ablegen der Zuschnitte 64 das Formteil 66 im Bereich des zweiten Abschnitts 47‴ auf die Oberseite 50 der Beschickungseinheit 45‴ gelegt oder fallengelassen werden, woraufhin die Beschickungseinheit 45‴ wieder in Richtung R2 aus der Thermoformmaschine 3 herausfährt, bis in die in Fig. 7 in durchgezogener Linie gezeigte Position 45"'a. Der vorstehend beschriebene Vorgang kann somit wiederholt werden, wobei in der ersten Position 45"'a der Beschickungseinheit 45‴ jeweils der erste Abschnitt 46‴ einen Zuschnitt 64 von der Ablageeinrichtung 10 und der zweite Abschnitt 47‴ einen Zuschnitt 64 von der Tischeinrichtung 31 gleichzeitig aufnehmen, die Beschickungseinheit 45‴ daraufhin in Richtung R1 verfahren wird, und dann die Zuschnitte 64 gleichzeitig vom zweiten Abschnitt 47" im Arbeitsbereich 55 sowie von dem ersten Abschnitt 46‴ auf dem Tisch 36 abgelegt werden. Somit können Zuschnitte 64 in zwei Schritten, unter Zwischenablegen dieser auf dem Tisch 36 der Tischeinrichtung 31, in den Arbeitsbereich 55 hinein transportiert werden.

Bei Bedarf können die vorstehenden Varianten des Betriebs der Anordnung 1"', 4‴ gemäß dem vierten Ausführungsbeispiel nach Bedarf kombiniert werden. Auch können diese Variante wie oben bereits beschrieben mit der Nutzung von Zuschnitten von einem Stapel 78 kombiniert werden.

Ferner sei darauf hingewiesen, dass in Fig. 7 die Tischeinrichtung 31 zwar mit einem in vertikaler Richtung V verfahrbaren Tisch 36 gezeigt ist, der Tisch 36 jedoch stattdessen feststehend ausgebildet sein kann, falls die Nutzung eines Stapels 78 nicht vorgesehen ist. Zudem könnte in einigen Varianten der vorstehenden Ausführungsbeispiele die Arbeitsstation 85 aus Fig. 6 zwischen die Trenneinrichtung 28 und die Ablageeinrichtung 10 zwischengeschaltet sein.

Bei den vorstehend beschriebenen Ausführungsbeispielen verläuft die zweite Richtung R2 jeweils parallel und entgegengesetzt der ersten Richtung R1 und parallel zur horizontalen Richtung H.

Insbesondere werden die Anordnungen 1, 1', 1", 1‴ zumindest teilweise automatisiert, bevorzugt aber vollautomatisch und insbesondere unter automatisierter Bereitstellung der Zuschnitte 64 auf der Ablageeinrichtung 10 betrieben.

### Bezugszeichenliste

- 1, 1', 1", 1‴: Anordnung zum Thermoformen
- 3: Thermoformmaschine
- 4, 4', 4",4‴: Anordnung zum Zuführen eines Halbzeugs
- 6: Ausgangsmaterial
- 10, 10': Ablageeinrichtung
- 11, 11': Transporteinrichtung
- 15, 15', 15‴: Beschickungsvorrichtung
- 19: Abrolleinrichtung
- 21: Rolle
- 28: Trenneinrichtung
- 31: Tischeinrichtung
- 36: Tisch
- 37: Verfahrrichtung (Tisch)
- 45, 45', 45‴: Beschickungseinheit
- 46: Abschnitt
- 46‴: erster Abschnitt
- 47‴: zweiter Abschnitt
- 48: Unterseite (Beschickungseinheit)
- 49: Aufnahmemittel
- 50: Oberseite (Beschickungseinheit)
- 55: Arbeitsbereich (Thermoformmaschine)
- 64: Zuschnitt
- 66: Formteil
- 78: Stapel
- 85: Arbeitsstation
- B: Boden
- E: Einlegeebene
- H: horizontale Richtung
- V: vertikale Richtung
- R1: erste Bewegungsrichtung (Beschickungseinheit)
- R2: zweite Bewegungsrichtung (Beschickungseinheit)

## Patentansprüche

1. Anordnung (1; 1'; 1"; 1"') zum Thermoformen mit einer Thermoformmaschine (3), sowie mit einer Anordnung (4; 4'; 4"; 4‴) zum Zuführen eines Halbzeugs als Ausgangsmaterial (6) für das Thermoformen zu der Thermoformmaschine (3);
wobei die Thermoformmaschine (3) als eine Closed-Chamber-Thermoformmaschine (3) ausgebildet ist, welche ein im Betrieb geschlossenes und abgedichtetes Maschinengehäuse aufweist;
wobei die Anordnung (4; 4'; 4"; 4‴) zum Zuführen des Halbzeugs eine Ablageeinrichtung (10; 10'), auf der nacheinander zu verarbeitende Zuschnitte (64) des Ausgangsmaterials jeweils in zumindest teilweise automatisierter Weise bereitstellbar sind, und eine bewegbare Beschickungseinheit (45; 45'; 45‴) aufweist;
wobei die Beschickungseinheit (45; 45'; 45‴) für ein Aufnehmen mindestens eines der Zuschnitte (64) an der Beschickungseinheit (45; 45'; 45‴) eingerichtet ist, wobei die Zuschnitte (64) jeweils an einer Unterseite (48) der Beschickungseinheit (45; 45'; 45‴) aufnehmbar sind und hierfür die Beschickungseinheit (45; 45'; 45‴) im Bereich der Unterseite (48) derselben mit Aufnahmemitteln (49) ausgestattet ist;
wobei die Beschickungseinheit (45; 45'; 45‴) zum Aufnehmen des Zuschnitts (64) von der Ablageeinrichtung (10; 10') positionierbar ist, und wobei die Beschickungseinheit (45; 45'; 45‴) danach zum Ablegen des von der Ablageeinrichtung (10; 10') aufgenommenen Zuschnitts (64) in einem Arbeitsbereich (55) der Thermoformmaschine (3) positionierbar ist; und
wobei die Anordnung (4; 4'; 4‴) zum Zuführen des Halbzeugs eine Abrolleinrichtung (19) zum Abrollen einer Rollenware aufweist, wobei die Abrolleinrichtung (19) der Ablageeinrichtung (10; 10') vorgelagert angeordnet ist, und die Anordnung (4; 4'; 4‴) zum Zuführen des Halbzeugs eine Trenneinrichtung (28) aufweist, die für ein Abtrennen eines Stücks der mittels der Abrolleinrichtung (19) bereichsweise abgerollten Rollenware zum Bilden der Zuschnitte (64) des Ausgangsmaterials (6) eingerichtet ist; und/oder
wobei die Anordnung (4") zum Zuführen des Halbzeugs für ein einzelnes Bereitstellen der Zuschnitte (64) des Ausgangsmaterials (6) auf der Ablageeinrichtung (10) jeweils als Zuschnitt einer Plattenware eingerichtet ist.

2. Anordnung zum Thermoformen nach Anspruch 1,
**dadurch gekennzeichnet, dass** die Trenneinrichtung (28) für das Abtrennen eines Stücks der mittels der Abrolleinrichtung (19) bereichsweise abgerollten und zumindest bereichsweise auf der Ablageeinrichtung (10; 10') abgelegten Rollenware zum Bilden der Zuschnitte (64) des Ausgangsmaterials (6) eingerichtet ist.

3. Anordnung zum Thermoformen nach Anspruch 1 oder 2,
**dadurch gekennzeichnet, dass** die Trenneinrichtung (28) als eine Schneideinrichtung ausgebildet ist.

4. Anordnung zum Thermoformen nach einem der vorstehenden Ansprüche,
**dadurch gekennzeichnet, dass** die Beschickungseinheit (45; 45'; 45‴) als ein bewegbarer Beschickungswagen ausgebildet ist.

5. Anordnung zum Thermoformen nach einem der vorstehenden Ansprüche,
**dadurch gekennzeichnet, dass** die bewegbare Beschickungseinheit (45; 45'; 45‴) oberhalb der Ablageeinrichtung (10; 10'), vorzugsweise entlang einer im Wesentlichen horizontalen Richtung (H), verfahrbar ist.

6. Anordnung zum Thermoformen nach einem der vorstehenden Ansprüche,
**dadurch gekennzeichnet, dass** die bewegbare Beschickungseinheit (45; 45'; 45‴) mindestens abschnittsweise in den Arbeitsbereich (55) der Thermoformmaschine (3) hinein verlagerbar ist.

7. Anordnung zum Thermoformen nach einem der vorstehenden Ansprüche,
**dadurch gekennzeichnet, dass** die Beschickungseinheit (45; 45'; 45‴) derart bewegbar angeordnet ist, dass auf einer Oberseite (50) der Beschickungseinheit (45; 45'; 45‴) ein aus einem zuvor in dem Arbeitsbereich (55) der Thermoformmaschine (3) abgelegten Zuschnitt (64) mittels Thermoformen hergestelltes und danach entformtes Formteil (66) ablegbar ist, insbesondere in jener Position der Beschickungseinheit (45; 45'; 45‴), in der die Beschickungseinheit (45; 45'; 45‴) für das Ablegen des Zuschnitts (64) in dem Arbeitsbereich (55) der Thermoformmaschine (3) positioniert ist.

8. Anordnung zum Thermoformen nach einem der vorstehenden Ansprüche,
**dadurch gekennzeichnet, dass** die Ablageeinrichtung (10; 10') mit einer Transporteinrichtung (11; 11'), beispielsweise einer bandartigen Transporteinrichtung (11; 11'), ausgebildet ist.

9. Anordnung zum Thermoformen nach einem der vorstehenden Ansprüche,
**dadurch gekennzeichnet, dass** die Beschickungseinheit (45"') einen ersten Abschnitt (46‴) und einen zweiten Abschnitt (47"') aufweist, wobei der erste und der zweite Abschnitt (46‴, 47"') jeweils für ein Aufnehmen eines Zuschnitts (64) des Ausgangsmaterials (6) an dem Abschnitt (46"', 47") eingerichtet sind, und wobei der erste Abschnitt (46‴) zum Aufnehmen des Zuschnitts (64) von der Ablageeinrichtung (10) positionierbar ist.

10. Anordnung zum Thermoformen nach Anspruch 9,
**dadurch gekennzeichnet, dass** der erste und der zweite Abschnitt (46"', 47") der Beschickungseinheit (45‴) entlang einer Bewegungsrichtung (R1, R2) der Beschickungseinheit (45‴) hintereinander angeordnet sind.

11. Verfahren zum Zuführen eines Halbzeugs als Ausgangsmaterial (6) für ein Thermoformen zu einer Thermoformmaschine (3), wobei die Thermoformmaschine (3) als eine Closed-Chamber-Thermoformmaschine (3) ausgebildet ist, welche ein im Betrieb geschlossenes und abgedichtetes Maschinengehäuse aufweist, wobei das Verfahren umfasst:
Bereitstellen eines von einer Mehrzahl aufeinanderfolgender Zuschnitte (64) des Ausgangsmaterials (6) auf einer Ablageeinrichtung (10; 10') in zumindest teilweise automatisierter Weise;
Aufnehmen des auf der Ablageeinrichtung (10; 10') bereitgestellten Zuschnitts (64) von dieser durch eine bewegbare Beschickungseinheit (45; 45'; 45‴), wobei der Zuschnitt (64) an einer Unterseite (48) der Beschickungseinheit (45; 45'; 45‴) aufgenommen wird und hierfür die Beschickungseinheit (45; 45'; 45‴) im Bereich der Unterseite (48) derselben mit Aufnahmemitteln (49) ausgestattet ist;
Bewegen (R1) der Beschickungseinheit (45; 45'; 45‴); und
Ablegen des an der Beschickungseinheit (45; 45'; 45‴) von der Ablageeinrichtung (10; 10') aufgenommenen Zuschnitts (64) in einem Arbeitsbereich (55) der als Closed-Chamber-Thermoformmaschine (3) ausgebildeten Thermoformmaschine (3);
wobei zum Bereitstellen des Zuschnitts (64) des Ausgangsmaterials (6) auf der Ablageeinrichtung (10; 10') ein Stück eines als Rollenware bereitgestellten Ausgangsmaterials mittels einer Abrolleinrichtung (19) abgerollt und zum Bilden des Zuschnitts (64) von der verbleibenden Rollenware mittels einer Trenneinrichtung (28) abgetrennt wird oder der Zuschnitt (64) des Ausgangsmaterials (6) auf der Ablageeinrichtung (10; 10') einzeln als Zuschnitt einer Plattenware bereitgestellt wird.

12. Verfahren nach Anspruch 11,
**dadurch gekennzeichnet, dass** zum Bereitstellen des Zuschnitts (64) des Ausgangsmaterials (6) auf der Ablageeinrichtung (10; 10') das Stück des als Rollenware bereitgestellten Ausgangsmaterials abgerollt, auf der Ablageeinrichtung (10; 10') zumindest abschnittsweise abgelegt, und zum Bilden des Zuschnitts (64) von der verbleibenden Rollenware abgetrennt wird.

## Claims

1. Assembly (1; 1'; 1"; 1‴) for thermoforming having a thermoforming machine (3), and having an assembly (4; 4'; 4"; 4"') for supplying a semifinished product as a starting material (6) for thermoforming to the thermoforming machine (3); wherein the thermoforming machine (3) is embodied as a closed-chamber thermoforming machine (3), which has a machine housing that is closed and sealed during operation;
wherein the assembly (4; 4'; 4"; 4‴) for supplying the semi-finished product has a depositing device (10; 10'), on which blanks (64) of the starting material to be processed in succession can be provided in each case in an at least partially automated manner, and a movable feeding unit (45; 45'; 45‴);
wherein the feeding unit (45; 45'; 45‴) is configured so as to receive at least one of the blanks (64) on the feeding unit (45; 45'; 45‴), wherein the blanks (64) can be received in each case on an underside (48) of the feeding unit (45; 45'; 45‴) and for this purpose the feeding unit (45; 45'; 45‴) is fitted in the region of the underside (48) thereof with receiving means (49);
wherein the feeding unit (45; 45'; 45") can be positioned for receiving the blank (64) from the depositing device (10; 10'), and wherein the feeding unit (45; 45'; 45‴) can then be positioned for depositing the blank (64) that is received from the depositing device (10; 10') in a working region (55) of the thermoforming machine (3); and
wherein the assembly (4; 4'; 4"') for supplying the semifinished product has an unrolling device (19) for unrolling a rolled item, wherein the unrolling device (19) is arranged upstream of the depositing device (10; 10'), and the assembly (4; 4'; 4ʺʺ) for supplying the semifinished product has a separating device (28) which is configured so as to separate a piece of the rolled item unrolled in regions by means of the unrolling device (19) to form the blanks (64) of the starting material (6); and/or
wherein the assembly (4") for supplying the semifinished product for an individual provision of the blanks (64) of the starting material (6) on the depositing device (10) is in each case configured as a blank of a sheet product.

2. Assembly for thermoforming according to claim 1,
**characterised in that** the separating device (28) is configured for separating a piece of the rolled item unrolled in regions by means of the unrolling device (19) and deposited at least in regions on the depositing device (10; 10') to form the blanks (64) of the starting material (6).

3. Assembly for thermoforming according to claim 1 or 2, **characterised in that** the separating device (28) is embodied as a cutting device.

4. Assembly for thermoforming according to one of the preceding claims, **characterised in that** the feeding unit (45; 45'; 45‴) is designed as a movable feeding carriage.

5. Assembly for thermoforming according to one of the preceding claims, **characterised in that** the movable feeding unit (45; 45'; 45 ‴) is movable above the depositing device (10; 10 '), preferably along an essentially horizontal direction (H).

6. Assembly for thermoforming according to one of the preceding claims, **characterised in that** the movable feeding unit (45; 45'; 45‴) is displaceable at least in sections into the working region (55) of the thermoforming machine (3).

7. Assembly for thermoforming according to one of the preceding claims, **characterised in that** the feeding unit (45; 45'; 45‴) is arranged movably in such a way that a moulded part (66) that is produced by means of thermoforming from a blank (64) that is previously deposited in the working area (55) of the thermoforming machine (3) and then demoulded can be deposited on an upper side (50) of the feeding unit (45; 45'; 45"), in particular **in that** position of the feeding unit (45; 45'; 45‴) in which the feeding unit (45; 45'; 45‴) is positioned in the working area (55) of the thermoforming machine (3) so as to deposit the blank (64).

8. Assembly for thermoforming according to one of the preceding claims, **characterised in that** the depositing device (10; 10') is embodied with a transport device (11; 11'), for example a belt-like transport device (11; 11').

9. Assembly for thermoforming according to one of the preceding claims, **characterised in that** the feeding unit (45"') has a first section (46‴) and a second section (47‴), wherein the first and second section (46‴, 47‴) are each configured so as to receive a blank (64) of the starting material (6) on the section (46"', 47‴), and wherein the first section (46"') can be positioned so as to receive the blank (64) from the depositing device (10).

10. Assembly for thermoforming according to claim 9,
**characterised in that** the first and second section (46‴, 47‴) of the feeding unit (45‴) are arranged one behind the other along a direction of movement (R1, R2) of the feeding unit (45‴).

11. Method for supplying a semifinished product as a starting material (6) to a thermoforming machine (3), wherein the thermoforming machine (3) is embodied as a closed-chamber thermoforming machine (3), which comprises a machine housing that is closed and sealed during operation, wherein the method comprises:
providing one of a plurality of successive blanks (64) of the starting material (6) on a depositing device (10; 10') in an at least partially automated manner;
receiving the blank (64) that is provided on the depositing device (10; 10') from this depositing device by means of a movable feeding unit (45; 45'; 45‴), wherein the blank (64) is received on an underside (48) of the feeding unit (45; 45'; 45‴) and for this purpose the feeding unit (45; 45 '; 45‴) is fitted with receiving means (49) in the region of the underside (48) thereof;
moving (R1) the feeding unit (45; 45'; 45‴); and
depositing the blank (64) that is received on the feeding unit (45; 45'; 45‴) from the depositing device (10; 10') in a working area (55) of the thermoforming machine (3) that is configured as a closed-chamber thermoforming machine (3); wherein, in order to provide the blank (64) of the starting material (6) on the depositing device (10; 10'), a piece of starting material that is provided as a rolled item is unrolled by means of an unrolling device (19) and, in order to form the blank (64), is separated from the remaining rolled item by means of a separating device (28), or the blank (64) of the starting material (6) is provided individually on the depositing device (10; 10') as a blank of a sheet product.

12. Method according to claim 11,
**characterised in that** in order to provide the blank (64) of the starting material (6) on the depositing device (10; 10'), the piece of the starting material that is provided as rolled item is unrolled, deposited on the depositing device (10; 10') at least in sections, and separated from the remaining rolled item to form the blank (64).

## Revendications

1. Agencement (1 ; 1' ; 1" ; 1‴) pour le thermoformage avec une machine de thermoformage (3), ainsi qu'avec un agencement (4; 4' ; 4" ; 4"') pour l'acheminement d'un demi-produit comme matériau de départ (6) pour le thermoformage vers la machine de thermoformage (3) ;
dans lequel la machine de thermoformage (3) est réalisée sous la forme d'une machine de thermoformage à chambre fermée (3) qui présente un carter de machine fermé et étanche pendant le fonctionnement ;
dans lequel l'agencement (4 ; 4' ; 4" ; 4"') pour l'acheminement du demi-produit présente un dispositif de dépose (10 ; 10') sur lequel des découpes (64) du matériau de départ à traiter successivement peuvent être mises à disposition de manière au moins partiellement automatisée, et une unité d'alimentation mobile (45 ; 45' ; 45"') ;
dans lequel l'unité d'alimentation (45 ; 45' ; 45"') est conçue pour recevoir au moins l'une des découpes (64) sur l'unité d'alimentation (45 ; 45' ; 45"'), les découpes (64) pouvant être reçues chacune sur une face inférieure (48) de l'unité d'alimentation (45 ; 45' ; 45") et l'unité d'alimentation (45 ; 45' ; 45"') étant équipée à cet effet de moyens de réception (49) dans la zone de sa face inférieure (48) ;
dans lequel l'unité d'alimentation (45 ; 45' ; 45"') peut être positionnée pour recevoir la découpe (64) provenant du dispositif de dépose (10 ; 10'), et l'unité d'alimentation (45 ; 45' ; 45"') peut ensuite être positionnée pour déposer la découpe (64) reçue du dispositif de dépose (10 ; 10') dans une zone de travail (55) de la machine de thermoformage (3) ; et
dans lequel l'agencement (4 ; 4' ; 4"') pour l'acheminement du demi-produit présente un dispositif de déroulement (19) pour dérouler un produit en rouleau, le dispositif de déroulement (19) étant disposé en amont du dispositif de dépose (10 ; 10'), et l'agencement (4 ; 4' ; 4"') pour l'acheminement du demi-produit présente un dispositif de séparation (28) qui est conçu pour séparer un morceau du produit en rouleau déroulé par zones au moyen du dispositif de déroulement (19) pour former les découpes (64) du matériau de départ (6) ; et/ou
dans lequel l'agencement (4") pour l'acheminement du demi-produit est conçu pour mettre à disposition individuellement les découpes (64) du matériau de départ (6) sur le dispositif de dépose (10) sous la forme de découpes d'un produit en plaque.

2. Agencement de thermoformage selon la revendication 1,
**caractérisé en ce que** le dispositif de séparation (28) est conçu pour séparer un morceau du produit en rouleau déroulé par zones au moyen du dispositif de déroulement (19) et déposé au moins par zones sur le dispositif de dépose (10 ; 10') pour former les découpes (64) du matériau de départ (6).

3. Agencement de thermoformage selon la revendication 1 ou 2,
**caractérisé en ce que** le dispositif de séparation (28) est réalisé sous la forme d'un dispositif de coupe.

4. Agencement de thermoformage selon l'une des revendications précédentes, **caractérisé en ce que** l'unité d'alimentation (45 ; 45' ; 45"') est réalisée sous la forme d'un chariot d'alimentation mobile.

5. Agencement de thermoformage selon l'une des revendications précédentes, **caractérisé en ce que** l'unité d'alimentation mobile (45 ; 45' ; 45"') peut être déplacée au-dessus du dispositif de dépose (10 ; 10'), de préférence le long d'une direction sensiblement horizontale (H).

6. Agencement de thermoformage selon l'une des revendications précédentes, **caractérisé en ce que** l'unité d'alimentation mobile (45 ; 45' ; 45"') peut être déplacée au moins par sections dans la zone de travail (55) de la machine de thermoformage (3).

7. Agencement de thermoformage selon l'une des revendications précédentes, **caractérisé en ce que** l'unité d'alimentation (45 ; 45' ; 45"') est disposée de manière mobile de telle sorte que, sur une face supérieure (50) de l'unité d'alimentation (45 ; 45"; 45"'), une pièce moulée (66) fabriquée par thermoformage à partir d'une découpe (64) préalablement déposée dans la zone de travail (55) de la machine de thermoformage (3) et ensuite démoulée peut être déposée, en particulier dans la position de l'unité d'alimentation (45 ; 45' ; 45"') dans laquelle l'unité d'alimentation (45 ; 45' ; 45"') est positionnée pour déposer la découpe (64) dans la zone de travail (55) de la machine de thermoformage (3).

8. Agencement de thermoformage selon l'une des revendications précédentes, **caractérisé en ce que** le dispositif de dépose (10 ; 10') est réalisé avec un dispositif de transport (11 ; 11'), par exemple un dispositif de transport de type bande (11 ; 11').

9. Agencement de thermoformage selon l'une des revendications précédentes, **caractérisé en ce que** l'unité d'alimentation (45"') présente une première section (46"') et une deuxième section (47"'), la première et la deuxième section (46"', 47"') étant chacune conçues pour recevoir une découpe (64) du matériau de départ (6) sur la section (46"', 47‴), et la première section (46"') pouvant être positionnée pour recevoir la découpe (64) provenant du dispositif de dépose (10).

10. Agencement de thermoformage selon la revendication 9,
**caractérisé en ce que** la première et la deuxième section (46"', 47"') de l'unité d'alimentation (45"') sont disposées l'une derrière l'autre le long d'une direction de déplacement (R1, R2) de l'unité d'alimentation (45"').

11. Procédé pour acheminer un demi-produit servant de matière première (6) pour un thermoformage vers une machine de thermoformage (3), la machine de thermoformage (3) étant réalisée sous la forme d'une machine de thermoformage à chambre fermée (3) qui présente un carter de machine fermé et étanche pendant le fonctionnement, le procédé comprend :
la mise à disposition de l'une d'une pluralité de découpes successives (64) du matériau de départ (6) sur un dispositif de dépose (10 ; 10') de manière au moins partiellement automatisée ;
la réception de la découpe (64) mise à disposition sur le dispositif de dépose (10 ; 10') à partir de celui-ci par une unité d'alimentation mobile (45 ; 45' ; 45"'), la découpe (64) étant reçue sur une face inférieure (48) de l'unité d'alimentation (45 ; 45' ; 45"') et l'unité d'alimentation (45 ; 45" ; 45‴) étant équipée à cet effet de moyens de réception (49) dans la zone de sa face inférieure (48) ;
le déplacement (R1) de l'unité d'alimentation (45 ; 45' ; 45"') ; et
la dépose de la découpe (64) reçue sur l'unité d'alimentation (45 ; 45' ; 45"') à partir du dispositif de dépose (10 ; 10') dans une zone de travail (55) de la machine de thermoformage (3) réalisée sous la forme d'une machine de thermoformage à chambre fermée (3) ;
dans lequel, pour mettre à disposition la découpe (64) du matériau de départ (6) sur le dispositif de dépose (10 ; 10'), un morceau d'un matériau de départ mis à disposition sous forme de produit en rouleau est déroulé au moyen d'un dispositif de déroulement (19) et séparé du produit en rouleau restant au moyen d'un dispositif de séparation (28) pour former la découpe (64), ou la découpe (64) du matériau de départ (6) est mise à disposition sur le dispositif de dépose (10 ; 10') individuellement sous forme de découpe d'un produit en plaque.

12. Procédé selon la revendication 11,
**caractérisé en ce que**, pour mettre à disposition la découpe (64) du matériau de départ (6) sur le dispositif de dépose (10 ; 10'), le morceau du matériau de départ mis à disposition sous forme de produit en rouleau est déroulé, déposé au moins par sections sur le dispositif de dépose (10 ; 10') et séparé du produit en rouleau restant pour former la découpe (64).
